## Europäisches Patentamt
## European Patent Office
## Office européen des brevets

(19)

(11) Veröffentlichungsnummer: **0 028 742**
**B1**

(12)

# EUROPÄISCHE PATENTSCHRIFT

(45) Veröffentlichungstag der Patentschrift:
15.06.83

(51) Int. Cl.³: **F 16 L 51/02**

(21) Anmeldenummer: 80106492.4

(22) Anmeldetag: 23.10.80

(54) **Faltenbalgkompensator.**

(30) Priorität: 08.11.79 DE 2945108

(43) Veröffentlichungstag der Anmeldung:
20.05.81 Patentblatt 81/20

(45) Bekanntmachung des Hinweises auf die Patenterteilung:
15.06.83 Patentblatt 83/24

(84) Benannte Vertragsstaaten:
BE DE FR GB IT NL

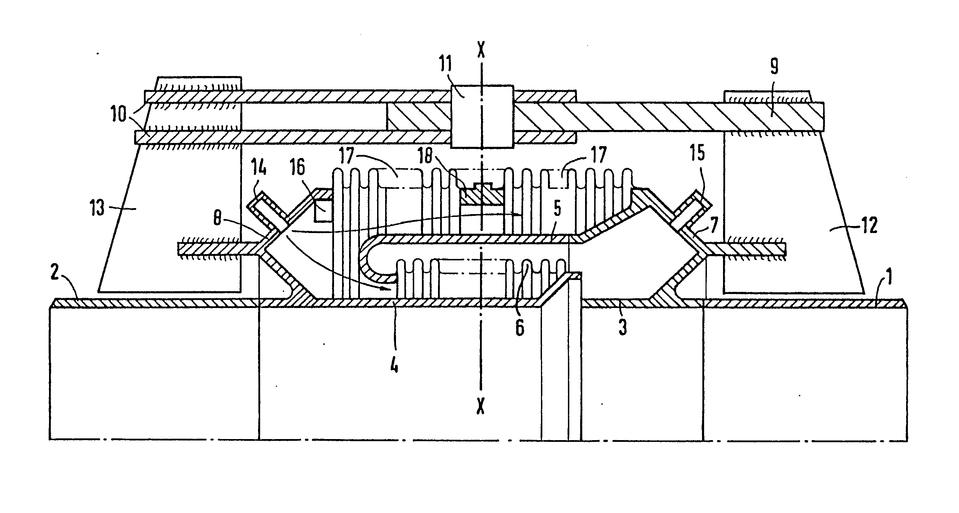

(56) Entgegenhaltungen:
DE-A-2 631 566
DE-A-2 848 561
DE-B-1 264 897
DE-C-277 612
US-A-3 241 868
Eberhard Sprenger, Taschenbuch für Heizung und
Klimatechnik, 60. Ausgabe 1979, R. Oldenbourg,
München, Wien, Seite 583, Bild 235 — 13b

(73) Patentinhaber: **INTERATOM Internationale Atomreaktorbau GmbH, Friedrich-Ebert-Strasse, D-5060 Bergisch Gladbach 1 (DE)**

(72) Erfinder: **Jansing, Walter Dipl.-Ing., Diakonissenweg 26, D-5060 Bergisch Gladbach 1 (DE)**
Erfinder: **Hundhausen, Wolfgang, Kolpingstrasse 16, D-5241 Wehbach (DE)**
Erfinder: **Büscher, Enno, Zu den Birken 22, D-5067 Kürten-Eichhof (DE)**

(74) Vertreter: **Mehl, Ernst, Dipl.-Ing., Postfach 22 01 76, D-8000 München 22 (DE)**

## Faltenbalgkompensator

Die vorliegende Erfindung betrifft einen Kompensator nach dem Oberbegriff des ersten Anspruchs, insbesondere für Rohrleitungen, die ein heißes Flüssigmetall enthalten, wie es in bestimmten Arten von Kernreaktoren zur Kühlung verwendet wird. Dieses Flüssigmetall erreicht im Betrieb Temperaturen bis über 500° C, so daß die es führenden Rohrleitungen erheblichen Wärmedehnungen ausgesetzt sind. Die Möglichkeit, zum Ausgleich dieser Wärmedehnungen die Rohrleitungen z. B. in Schleifen zu verlegen, ist aus Raumgründen nicht immer gegeben und zwingt zur Verwendung anderer Mittel, die ein gegenseitiges Verschieben der einzelnen Rohrstränge gestatten. Für diesen zweck hat die Anmelderin bereits in der DE-A-2 631 566 einen Kompensator mit zwei hintereinander angeordneten Faltenbälgen vorgeschlagen, der Axialbewegungen der beiden Rohrleitungen zueinander zuläßt und darüber hinaus eine Reihe anderer Anforderungen erfüllt: Es ist in allen seinen Teilen auch fernbedient inspizierbar, ohne daß dazu die Rohrleitung selbst geöffnet werden müßte und ist so konstruiert, daß auch bei einem Leckwerden eines Faltenbalges ein Austreten des in der Rohrleitung befindlichen Mediums verhindert wird, was besonders bei Verwendung flüssiger Alkalimetalle von Bedeutung ist, da diese mit dem Luftsauerstoff sehr heftig reagieren. Die so bekannten Merkmale entsprechen den Merkmalsgruppen a) und b) des Anspruchs 1. Tritt zwischen den beiden miteinander zu verbindenden Rohrleitungen außer einer axialen Verschiebung auch noch eine Abwinkelung auf, ist dieser Kompensator weniger geeignet, da die Gefahr einer Belastung des Faltenbalges in Querrichtung zu groß ist. Außerdem wäre eine geringere Baulänge günstiger. Zur Verringerung der Baulänge von Faltenbalgkompensatoren werden am Gegenstand der DE-B-1 264 897 und der US-A-3 241 868 jeweils zwei Faltenbälge parallel angeordnet. Darüber hinaus ist der Kompensator gemäß US-A-3 241 868 winkelbeweglich. Für die beiden vorgenannten Kompensatoren sind jedoch zwingend drei Faltenbälge erforderlich, die darüber hinaus sämtlich durch das in der Rohrleitung befindliche Fluid von außen beaufschlagt sind.

Aufgabe der vorliegenden Erfindung ist, ausgehend vom Gegenstand der DE-B-1 264 897 ein Kompensator, der auch geringe Winkelabweichungen zwischen den Rohrleitungen ausgleicht. Auch soll gegenüber dem früheren Kompensator die Baulänge verringert werden.

Die Lösung der Aufgabe geschieht durch die im Teil c) des ersten Anspruchs angegebenen Mittel. Jeder der beiden Stutzen bzw. Ansatzrohrstücke des Kompensators ist an seinem freien Ende in gewohnter Weise mit der entsprechenden Rohrleitung verbindbar, ist jedoch mit dem anderen Stutzen nur biegsam verbunden. Dadurch, daß der zweite Flansch, der erste Faltenbalg, und die Hülse konzentrisch zueinander angeordnet sind, wird erheblich an Baulänge gespart. Zwischen Hülse und erstem Faltenbalg entsteht ein Raum, der mit der Rohrleitung in Verbindung steht und mit dem in der Rohrleitung geförderten Fluid gefüllt ist.

Der Raum zwischen Faltenbalg und zweitem Stutzen jedoch ist, wie weiter unten näher ausgeführt, zugänglich, so daß das empfindlichste Bauteil der Verbindung, der erste Faltenbalg ohne weiteres geprüft werden kann. Dieser Raum wird jedoch durch die Flansche und den zweiten Faltenbalg nach außen dicht abgeschlossen, so daß auch bei einem Leckwerden des ersten Faltenbalgs keine Fluid an die Atmosphäre austreten kann. Die Konstruktion ist angular beweglich.

Diese Eigenschaft wird durch die im zweiten Anspruch angegebenen Mittel verstärkt. Es werden dadurch Winkelbewegungen in einer definierten Ebene ermöglicht, ohne daß die Faltenbälge ausknicken könnten. Angular-Kompensatoren als solche sind bekannt (vgl. Eberhard Sprenger, Taschenbuch für Heizung und Klimatechnik, 60. Ausgabe 1979, R. Oldenbourg München Wien, Seite 583, Bild 235 – 136).

Das im dritten Anspruch angegebene Merkmal bedeutet die Zugänglichkeit des vom zweiten Faltenbalg umschlossenen Raumes (der im Falle von flüssigmetallführenden Rohrleitungen üblicherweise mit einem Schutzgas gefüllt ist) für alle Zwecke der Prüfung und Überwachung.

Die im vierten Anspruch geforderten Mittel zur Druckmessung erlauben eine Überwachung des Kompensators auf Dichtigkeit, indem etwa aus diesem austretendes Fluid, insbesondere solches hoher Temperatur durch Aufheizen des Schutzgases und damit einhergehend seiner Druckerhöhung einen entsprechenden Hinweis liefern würde.

Ein Ausführungsbeispiel der Erfindung ist in der Zeichnung dargestellt, und zwar als halber Längsaxialschnitt.

Zwei Rohrleitungen 1, 2 sind miteinander zu verbinden; sie können Winkelbewegungen um die Achse X-X machen. Die Rohrleitung 1 ist mit einem ersten Stutzen bzw. Ansatzrohrstück 3 und die Rohrleitung 2 mit einem zweiten Stutzen bzw. Ansatzrohrstück 4 in bekannter Weise dicht verbunden, z. B. durch Schweißen. Mit dem ersten Stutzen 3 fest verbunden ist eine Hülse 5 mit an ihrem freien Ende nach innen umgebogenen Rand, die konzentrisch über den zweiten Stutzen 4 geschoben ist, ohne diesen jedoch zu berühren. Die dichte Verbindung zwischen beiden Teilen wird durch einen ersten Faltenbalg 6 hergestellt. Die Stutzen 3, 4 sind mit (hier z. B. angedrehten) Flanschen 7 bzw. 8 versehen, und diese wiederum werden durch einen zweiten Faltenbalg 17 dicht miteinander verbunden. In der Zeichnung ist der bei Rohrleitungen großer Durchmesser (z. B. 800 mm) auftretende Fall dargestellt, daß der zweite Faltenbalg nicht in einem Stück herstellbar ist; in diesem Falle besteht er aus zwei gleichen Hälften mit einem umlaufenden Zwischenring 18. An den Flanschen 7, 8 sind in der Zeichnungsebene oder parallel dazu gelegene Stege 12, 13 befestigt und an diesen wiederum Hebel 9, 10 (lezterer hier zweigeteilt). Die Hebel 9, 10 sind um einen in der Drehachse X-X angeordneten Bolzen 11 beweglich. Diese Konstruktion erübrigt eine direkte Befestigung an den Rohrleitungen 1, 2, gestattet jedoch ggf. ein Abstützen auf denselben. Der von den Flanschen 7, 8 und dem zweiten Faltenbalg 17 umschlossene Raum ist mit einem Gas gefüllt, das gegenüber dem in den Rohrleitungen 1, 2 transportierten Fluid inert ist, so z. B. im Falle von flüssigen Alkalimetallen mit Argon. Zu Prüf- und Inspektionszwecken kann jedoch eine im Betrieb verschlossene Öffnung 14 geöffnet werden und durch diese können hier nicht dargestellte Prüf- und Inspektionsgeräte in die Räume zwischen der Hülse 5 und dem zweiten Faltenbalg 17 und dem zweiten Stutzen und dem ersten Faltenbalg 6 eingebracht werden (durch Pfeile angedeutet). Die erforderlichen Überprüfungen können so ohne Trennen von prüfpflichtigen Schweißnähten durchgeführt werden und ohne daß ein Zugang zur Rohrleitung selbst erforderlich ist. Durch eine mit 15 bezeichnete, im Betrieb ebenfalls verschlossene Öffnung können die Rohrleitungen 1, 2 beim Füllen mit Flüssigkeit entgast werden. Nicht näher beschriebene, dem Fachmann jedoch geläufige Geräte zur Drucküberprüfung sind bei 16 angedeutet. Würde z. B. heißes Flüssigmetall an einer schafhaften Stelle des ersten Faltenbalgs 6 austreten, würde dies zu einer verstärkten Aufheizung und damit zu einer Druckerhöhung des Schutzgases führen, was mittels hier nicht gezeigter Alarmgeräte angezeigt werden kann. Der zweite Faltenbalg 17 kann von außen auf seine Integrität geprüft werden. Die hier dargestellte, Y-förmige Ausgestaltung der Flansche 7, 8 ist besonders geeignet, Kräfte in hochbelastete, u. U. auch Temperaturwechseln ausgesetzte Bauteile zu übertragen.

## Patentansprüche

1. Kompensator zur Verbindung von Rohrleitungen mit zwei Faltenbälgen (6, 17) und zwei an jeweils einem ihrer Enden mit den Rohrleitungen verbindbaren Stutzen (3, 4) mit folgenden Merkmalen:

a) Am ersten Stutzen (3) ist eine den zweiten Stutzen (4) konzentrisch umfassende Hülse (5) befestigt.

b) Ein erster Faltenbalg (6) verbindet das freie Ende der Hülse (5) im Inneren derselben mit dem dem ersten Stutzen (3) zugewandten Ende des zweiten Stutzens (4).

c) Ein zweiter Faltenbalg (17) ist konzentrisch um die Hülse (5) herum angeordnet und verbindet zwei Flansche (7, 8) miteinander, die am ersten (3) bzw. zweiten Stutzen (4) dicht befestigt sind.

2. Kompensator nach Anspruch 1 zum Ausgleich von Abwinkelungen zwischen den Rohrleitungen mit folgenden Merkmalen:

a) An den Stutzen (3), (4) sind in einer deren Längsachse enthaltenden Ebene paarweise gelenkig (11) miteinander verbundene Hebel (9), (10) befestigt.

3. Kompensator nach Anspruch 1 oder zwei mit folgenden Merkmalen:

a) Der zweite Flansch (8) weist eine verschließbare Öffnung (14) auf, durch die Prüf- und Beobachtungsgeräte in den Raum zwischen der Hülse (5) und dem zweiten Faltenbalg (17) einbringbar sind.

4. Komparator nach Anspruch 1 oder 2 mit folgenden Merkmalen:

a) Im Raum zwischen der Hülse (5) und dem zweiten Faltenbalg (17) sind Mittel (16) zur Messung des in dem Raum herrschenden Drucks vorhanden.

## Claims

1. Compensator for connecting pipelines to two pleated bellows (6, 17) and two connecting members (3, 4) which can be connected at a respective one of their ends to the pipelines, comprising the following features:

a) the first connecting member (3) is attached to a sleeve (5) which concentrically embraces the second connecting member (4)

b) a first pleated bellows (6) connects the free end of the sleeve (5) in the interior thereof to the end, which faces towards the first connecting member (3), which faces towards the first connecting member (3), of the second connecting member (4)

c) a second pleated bellows (17) is arranged concentrically around the sleeve (5) and connects together two flanges (7, 8) which are hermetically attached to the first connecting member (3) and to the second connecting member (4).

2. Compensator as claimed in claim 1 for compensating angles between the pipelines comprising the following features:

a) in a plane containing their longitudinal axis, attached to the connecting members (3), (4) are levers (9), (10) articulated (11) with one another in pairs.

3. Compensator as claimed in claim 1 or 2 comprising the following features:

a)   the second flange (8) has a closeable opening (14) through which test and observation equipment can be introduced into the space between the sleeve (5) and the second pleated bellows 17)

4. Compensator as claimed in claim 1 or 2 comprising the following features:

a)   in the space between the sleeve (5) and the second pleated bellows (17) are provided means (16) for the measurement of the pressure prevailing in the space.

**Revendications**

1. Compensateur pour relier des conduits de tuyaux avec deux soufflets (6, 17) et deux embouts (3, 4) susceptibles d'être reliés par respectivement une de leurs extrémités aux conduits de tuyaux, avec les caractéristiques suivantes:

a)   au premier embout (3) est fixée une douille (5) qui entoure concentriquement le second embout (4),

b)   un premier soufflet (6) relie l'extrémité libre de la douille (5), à l'intérieur de celle-ci, à l'extrémité du second embout (4) qui est tournée vers le premier embout (3),

c)   un second soufflet (17) est disposé concentriquement autour de la douille (5) et relie entre eux deux flasques (7, 8) qui sont fixés de façon étanche respectivement au premier (3) et au second embouts (4).

2. Compensateur selon la revendication 1 pour compenser des écarts angulaires entre les conduits de tuyaux, ayant les caractéristiques suivantes:

a)   aux embouts (3), (4) sont fixés, dans un plan contenant leurs axes longitudinaux, des leviers (9), (10), articulés (11) par paires entre eux.

3. Compensateur selon la revendication 1 ou 2, ayant les caractéristiques suivantes:

a)   le second flasque (8) comporte une ouverture (14) susceptible d'être obturée et à travers laquelle des appareils de contrôle et d'observation sont susceptibles d'être introduits dans l'espace compris entre la douille (5) et le second soufflet (17).

4. Compensateur selon la revendication 1 ou 2, ayant caractéristiques suivantes:

a)   dans l'espace entre la douille (5) et la second soufflet (17) sont prévus des moyens (16) pour mesurer la pression qui règne dans cet espace.